# EUROPEAN PATENT APPLICATION

(11) **EP 4 611 457 A1**
(43) Date of publication of application: **03.09.2025**
(21) Application number: 23910154.6
(22) Date of filing: 13.12.2023
(51) Int. Cl.: H04W 72/0453

(54) **COMMUNICATION METHOD, COMMUNICATION APPARATUS, AND NETWORK DEVICE**

(30) Priority: 27.12.2022 CN 202211690132
(71) Applicant: Huawei Technologies Co., Ltd., Shenzhen, Guangdong 518129 (CN)
(72) Inventor: SHEN, Mengkui, Shenzhen, Guangdong 518129 (CN); CHEN, Weimin, Shenzhen, Guangdong 518129 (CN); MA, Chuanhui, Shenzhen, Guangdong 518129 (CN); LIN, Huajiong, Shenzhen, Guangdong 518129 (CN); FENG, Xin, Shenzhen, Guangdong 518129 (CN)
(74) Representative: Gill Jennings & Every LLP
(86) International application number: PCT/CN2023/138493
(87) International publication number: WO 2024/140224

(57) **Abstract**

Embodiments of this application provide a communication method, a communication apparatus, and a network device. The method includes: A first network device determines power of a received satellite signal; when the power is less than or equal to a first power threshold, the first network device performs communication by using a first carrier, where the first carrier is a communication carrier of a satellite corresponding to the satellite signal; and when the power is greater than the first power threshold, the first network device performs communication by using a second carrier, where the second carrier is not a communication carrier of a satellite corresponding to the satellite signal. According to the foregoing method, spectral utilization can be improved without limiting a deployment location of a base station.

## Description

This application claims priority to Chinese Patent Application No. 202211690132.2, filed with the China National Intellectual Property Administration on December 27, 2022 and entitled "COMMUNICATION METHOD, COMMUNICATION APPARATUS, AND NETWORK DEVICE", which is incorporated herein by reference in its entirety.

### TECHNICAL FIELD

This application relates to the field of communication, and specifically, to a communication method, a communication apparatus, and a network device.

### BACKGROUND

With iterative update of wireless communication technologies, radio spectrum resources become increasingly strained, but licensed spectra have a problem of low spectral utilization. For example, for the avoidance communication interference, a satellite communication system and a terrestrial communication system use different bands to perform communication, but licensed bands of the satellite communication system cannot be used by the terrestrial communication system and licensed bands of the terrestrial communication system cannot be used by the satellite communication system either. This results in low spectral utilization.

A possible solution is to physically isolate the satellite communication system from the terrestrial communication system, that is, mount a base station at a location far away from a satellite receiver. In this way, the terrestrial communication system and the satellite communication system separately using a licensed band of each other does not cause interference to each other, so that the spectral utilization can be improved. However, such a solution imposes a limitation on a deployment location of the base station, and reduces the spectral utilization. How to improve the spectral utilization without limiting the deployment location of the base station is a problem to be resolved currently.

### SUMMARY

Embodiments of this application provide a communication method, a communication apparatus, a network device, a computer-readable storage medium, a computer program product, and a chip, so as to improve spectral utilization without limiting a deployment location of a base station.

According to a first aspect, embodiments of this application provide a communication method, including: A first network device determines power of a received satellite signal; when the power is less than or equal to a first power threshold, the first network device performs communication by using a first carrier, where the first carrier is a communication carrier of a satellite corresponding to the satellite signal; and when the power is greater than the first power threshold, the first network device performs communication by using a second carrier, where the second carrier is not a communication carrier of a satellite corresponding to the satellite signal.

When the power of the satellite signal is less than or equal to the first power threshold, it is indicated that the satellite is far away from the first network device, and use of the first carrier by the first network device does not cause interference to the satellite. When the power of the satellite signal is greater than the first power threshold, it is indicated that the satellite is close to the first network device, and the first network device may use the second carrier instead, to avoid interference to the satellite. Therefore, according to the embodiments, spectral utilization can be improved, and a deployment location of the first network device is not limited.

Optionally, when the power is less than or equal to the first power threshold, and when the power is greater than a second power threshold, the method further includes: The first network device suppresses an upper side lobe of the first carrier, where the second power threshold is less than the first power threshold.

When the power of the satellite signal is less than or equal to the first power threshold, and when the power of the satellite signal is greater than the second power threshold, it is indicated that the satellite is far away from the first network device, but there is still strong interference between the satellite and the first network device. In this case, the interference between the satellite and the first network device can be reduced by using an upper side lobe suppression function, and the first network device can still perform communication by using the satellite carrier (first carrier), thereby improving the spectral utilization.

Optionally, when the power is less than or equal to the first power threshold, and when the power is greater than a third power threshold, the method further includes: The first network device decreases transmit power of the first carrier, where the third power threshold is greater than the second power threshold.

Compared with the case in which the power of the satellite signal is greater than the second power threshold, in the embodiments, a distance between the satellite and the first network device is further reduced, and the interference between the satellite and the first network device is further increased. A communication requirement may not be met by using only the upper side lobe suppression function. In the embodiments, the transmit power of the first carrier is decreased, so that the first network device can still perform communication by using the satellite carrier (first carrier) when the power of the satellite signal is greater than the third power threshold, thereby improving the spectral utilization.

Optionally, that the first network device determines the power of the received satellite signal includes: The first network device determines the power within a guard period.

The guard period is a time period between uplink transmission and downlink transmission of the first network device. In the time period, the first network device usually does not transmit service data. The first network device senses the power of the satellite signal by using the guard period, so that an impact caused by sensing the power of the satellite signal on service data transmission may be avoided.

Optionally, that a first network device determines power of a received satellite signal includes: The first network device receives first power information of the satellite from a second network device, and the first network device determines the power of the received satellite signal based on the first power information.

The first network device may determine the power of the satellite signal via a nearby network device (for example, the second network device). In this way, the first network device can determine the power of the satellite signal without a need of hardware alteration, thereby reducing costs of determining the power of the satellite signal.

Optionally, that the first network device determines the power of the received satellite signal based on the first power information includes: The first network device receives second power information of the satellite from a third network device; and the first network device determines the power of the received satellite signal based on the first power information and the second power information, where when an absolute value of a difference between power indicated by the first power information and power sensed by the first network device is greater than a fourth power threshold, and when an absolute value of a difference between power indicated by the second power information and the power sensed by the first network device is greater than the fourth power threshold, the first network device determines that power indicated by target power information is the power of the received satellite signal; and the target power information is power information of a network device closest to the first network device.

In some cases, a sensing function of the first network device may be abnormal, and the first network device may make a decision based on a sensing result of a nearby network device. When the difference between the power indicated by the first power information and the power sensed by the first network device is greater than the fourth power threshold, and when the difference between the power indicated by the second power information and the power sensed by the first network device is greater than the fourth power threshold, it is indicated that there is a relatively large difference between a sensing result of the first network device and sensing results of a plurality of nearby network devices. The first network device may discard the sensing result of the first network device, and use the sensing result of the nearby network device as the power of the satellite signal received by the first network device, thereby avoiding interference caused by sensing function abnormality to satellite communication.

According to a second aspect, embodiments of this application provide a network device, where the network device includes M sensing antennas and N communication antennas, and both M and N are positive integers; the M sensing antennas are configured to sense power of a satellite signal; and the N communication antennas are configured to perform communication by using a first carrier or a second carrier. When the power is less than or equal to a first power threshold, the N communication antennas perform communication by using the first carrier; and when the power is greater than the first power threshold, the N communication antennas perform communication by using the second carrier, the first carrier is a communication carrier of a satellite corresponding to the satellite signal, and the second carrier is not a communication carrier of a satellite corresponding to the satellite signal.

An existing satellite band and a mobile communication band cannot be shared. Therefore, an antenna of an existing network device is usually an antenna dedicated to the mobile communication band, and cannot be for sensing the communication carrier of the satellite. The disposed M sensing antennas in this embodiment are antennas on the satellite band, so that the network device can sense the communication carrier of the satellite, thereby providing a hardware basis for improving spectral utilization. In addition, the sensing antenna and the communication antenna that are of the network device are co-located, and no additional sensing site needs to be deployed, so that costs and power consumption of sensing the power of the satellite signal may be reduced.

Optionally, the network device further includes M receive links, the M receive links are connected to the M sensing antennas in one-to-one correspondence, and M is a positive integer greater than 1.

Each sensing antenna is connected to one receive link to form a digital beamforming architecture. In this case, the M sensing antennas can simultaneously form a plurality of beams, and each beam can obtain an entire antenna gain. Global sensing at a top of the network device can be implemented without a need of scanning, thereby improving sensing efficiency of the network device.

Optionally, the network device further includes M switches, the M switches are connected to the M receive links in one-to-one correspondence, the M switches are connected to the M sensing antennas in one-to-one correspondence, and the M switches are connected to M communication antennas in the N communication antennas in one-to-one correspondence; when the M receive links are connected to the M sensing antennas via the M switches, the M receive links are disconnected from the M communication antennas; and when the M receive links are connected to the M communication antennas via the M switches, the M receive links are disconnected from the M sensing antennas.

The M sensing antennas share the receive links with the M communication antennas, and the receive links are used in different time through switching via the switches, so that costs of the network device may be reduced without affecting a communication function and a sensing function.

Optionally, the network device further includes M transmit links, and the M switches are connected to the M transmit links in one-to-one correspondence; and when the M receive links are connected to the M communication antennas via the M switches, the M transmit links are disconnected from the M communication antennas; or when the M transmit links are connected to the M communication antennas via the M switches, the M receive links are disconnected from the M communication antennas.

The M switches may be configured to switch connection relationships of the receive links, and may be configured to switch connection relationships of the transmit links, thereby saving switch components and reducing the costs of a network device.

Optionally, the M sensing antennas are located above the N communication antennas.

The satellite is located above the network device, and a terminal device is usually located below the network device. In this way, the sensing antennas are disposed above the communication antennas, so that communication between the terminal device and the network device is not affected, and the satellite signal can be better sensed.

According to a third aspect, a communication apparatus is provided. The apparatus may be a network device, or may be a chip in the network device. The apparatus may include a processing unit and a transceiver unit. When the apparatus is a communication device, the processing unit may be a processor, and the transceiver unit may be a transceiver. The communication device may further include a storage unit, and the storage unit may be a memory. The storage unit is configured to store instructions, and the processing unit executes the instructions stored in the storage unit, so that the communication device performs the method according to the first aspect and the optional implementations of the first aspect. When the apparatus is a chip in the communication device, the processing unit may be a processor, and the transceiver unit may be an input/output interface, a pin, a circuit, or the like. The processing unit executes instructions stored in a storage unit, so that the communication device performs the method according to the first aspect and the optional implementations of the first aspect. The storage unit may be a storage unit (for example, a register or a cache) in the chip, or may be a storage unit (for example, a read-only memory or a random access memory) that is in the communication device and that is located outside the chip.

According to a fourth aspect, a computer storage medium is provided. The computer-readable storage medium stores a computer program; and when the computer program is executed on a computer, the computer is enabled to perform the method according to the first aspect.

According to a fifth aspect, a computer program product is provided. The computer program product includes computer program code; and when the computer program code is run by a communication apparatus, the communication apparatus is enabled to perform the method according to the first aspect.

### BRIEF DESCRIPTION OF DRAWINGS

FIG. 1 is a diagram of a communication system applicable to an embodiment of this application;
FIG. 2 is a scenario of interference possibly existed between a satellite communication system and a terrestrial communication system;
FIG. 3 is another scenario of interference possibly existed between a satellite communication system and a terrestrial communication system;
FIG. 4 is a diagram of a spectrum of a satellite communication system and a terrestrial communication system;
FIG. 5 is a diagram of location relationships between a satellite and a network device;
FIG. 6 is a diagram of a network device according to an embodiment of this application;
FIG. 7 is a diagram of a network device including a receive link according to an embodiment of this application;
FIG. 8 is a diagram of an effect of a digital beamforming architecture according to an embodiment of this application;
FIG. 9 is a diagram of a network device including switches according to an embodiment of this application;
FIG. 10 is a diagram of a network device including transmit links according to an embodiment of this application;
FIG. 11 is a diagram of a state of switches of a network device according to an embodiment of this application;
FIG. 12 is a diagram of another state of switches of a network device according to an embodiment of this application;
FIG. 13 is a diagram of another network device according to an embodiment of this application;
FIG. 14 is a diagram of an operating effect of a network device according to an embodiment of this application;
FIG. 15 is a diagram of a communication method according to an embodiment of this application;
FIG. 16 is a diagram of a time domain resource division manner according to an embodiment of this application;
FIG. 17 is a diagram of a method for determining power of a satellite signal according to an embodiment of this application;
FIG. 18 is a diagram of processing manners of a first network device at different sensing power according to an embodiment of this application;
FIG. 19 is a diagram of relative location relationships between a satellite and a first network device at different moments according to an embodiment of this application;
FIG. 20 is a diagram of a transmit circuit according to an embodiment of this application;
FIG. 21 is a diagram of a communication effect achieved with the application of a communication method provided in an embodiment of this application;
FIG. 22 is a diagram of another communication effect achieved with the application of a communication method provided in an embodiment of this application;
FIG. 23 is a diagram of a structure of a communication apparatus according to an embodiment of this application;
FIG. 24 is a diagram of a structure of another communication apparatus according to an embodiment of this application; and
FIG. 25 is a diagram of a structure of a base station according to an embodiment of this application.

### DESCRIPTION OF EMBODIMENTS

Technical solutions of this application are described below with reference to accompanying drawings.

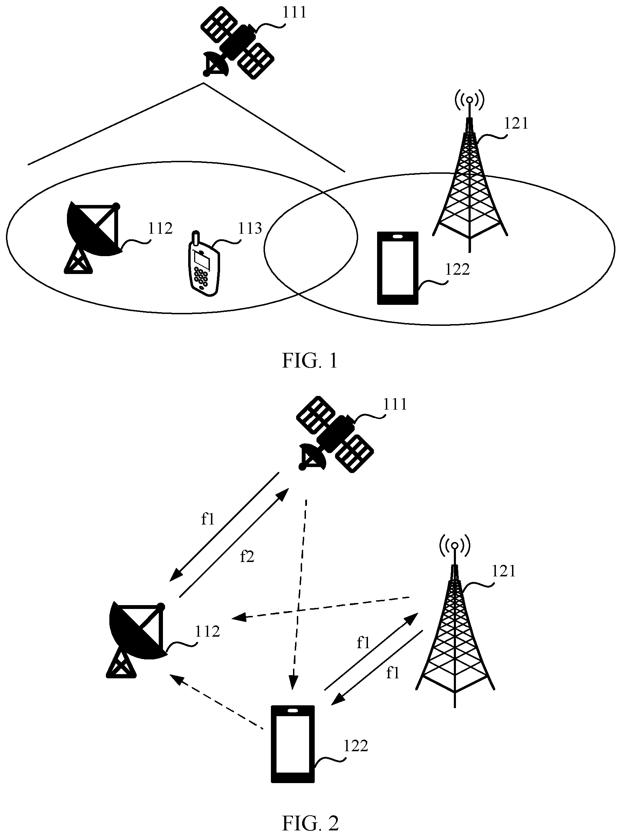

FIG. 1 is a diagram of a communication system applicable to an embodiment of this application. The communication system includes two subsystems: a satellite communication system and a terrestrial communication system. Compared with a base station communication system, the satellite communication system has larger coverage, and can effectively cover areas such as the sky, oceans, and polar regions. Compared with the satellite communication system, the terrestrial communication system has a lower transmission delay and a larger transmission bandwidth. Integration of the satellite communication system and the terrestrial communication system can bring better user experience to users.

The satellite communication system includes a satellite 111, a ground station 112, and a terminal 113. The terrestrial communication system includes a network device 121 and a terminal 122.

The satellite 111 may be a geostationary earth orbit (geostationary earth orbit, GEO) satellite, a medium earth orbit (medium earth orbit, MEO) satellite, or a low earth orbit (low earth orbit, LEO) satellite.

An orbital altitude of the GEO satellite is about 35,000 km. The GEO satellite is stationary relative to the ground and can provide a large coverage area. However, a distance between the GEO satellite and the ground is excessively long, and an antenna with a large diameter is required to perform communication. The excessively long distance also causes a long transmission delay of the GEO satellite, and cannot meet a requirement of a real-time service. In addition, limited synchronous orbit resources, high launch costs, and inability to cover polar regions are all factors that restrict development of the GEO satellite.

An orbital altitude of the MEO satellite is about 2,000 km to 35,000 km. The orbital altitude of the MEO satellite is lower than the orbital altitude of the GEO satellite but higher than an orbital altitude of the LEO satellite. In this way, a small quantity of MEO satellites can be used to implement global coverage. Currently, the MEO satellite is mainly used in positioning and navigation.

The orbital altitude of the LEO satellite is about 300 km to 2,000 km. The LEO satellite has a lower orbital altitude, and therefore, has a lower transmission delay and lower launch costs than the GEO satellite and MEO satellite. Therefore, a communication system based on the LEO satellite has greatly progressed in recent years.

The terminal 113 interacts with the satellite 111 through an air interface, to transmit signaling and service data. The satellite 111 is equivalent to a base station of the satellite communication system. After receiving the signaling and the service data uploaded by the terminal 113, the satellite 111 forwards the signaling and the service data to a core network via the ground station 112. The satellite 111 may further receive signaling and service data from the core network via the ground station 112, and forward the signaling and the service data to the terminal 113 through an air interface.

The terminal 113 may be a user equipment (user equipment, UE) having a satellite communication function, such as a mobile phone, a tablet computer, a wearable electronic device, a vehicle-mounted electronic device, an augmented reality (augmented reality, AR) device, a virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal 113 is not limited in embodiments of this application.

The terrestrial communication system in FIG. 1 may be a communication system in a 3^{rd} generation partnership project (3^{rd} generation partnership project, 3GPP), such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, a frequency division duplexing (frequency division duplexing, FDD) system, a time division duplexing (time division duplexing, TDD) system, a universal mobile telecommunications system (universal mobile telecommunications system, UMTS), a new radio (new radio, NR) system, or a future wireless communication system. The terrestrial communication system in FIG. 1 may alternatively be a communication system outside a 3GPP standard.

The network device 121 is a device that can communicate with a terminal device through an air interface and that can communicate with the core network through a wired connection such as an optical fiber. For example, the network device 121 may be a base station (base transceiver station, BTS) in the GSM system or the CDMA system, a NodeB (NodeB) in the WCDMA system, an evolved NodeB (evolved NodeB, eNB) in the LTE system, or a next generation NodeB (the next generation NodeB, gNB) in the NR system. Alternatively, the network device 121 may be a relay station that functions as a base station, an access point, a vehicle-mounted device, a wearable device, or a network device in a future evolved public land mobile network (public land mobile network, PLMN).

The terminal 122 may be a UE having a wireless communication function, for example, a mobile phone, a tablet computer, a wearable electronic device, a vehicle-mounted electronic device, an AR device, a VR device, a notebook computer, a UMPC, a netbook, or a PDA. A specific type of the terminal 122 is not limited in embodiments of this application.

The communication system shown in FIG. 1 is an example rather than a limitation, and a communication system applicable to this application is not limited thereto.

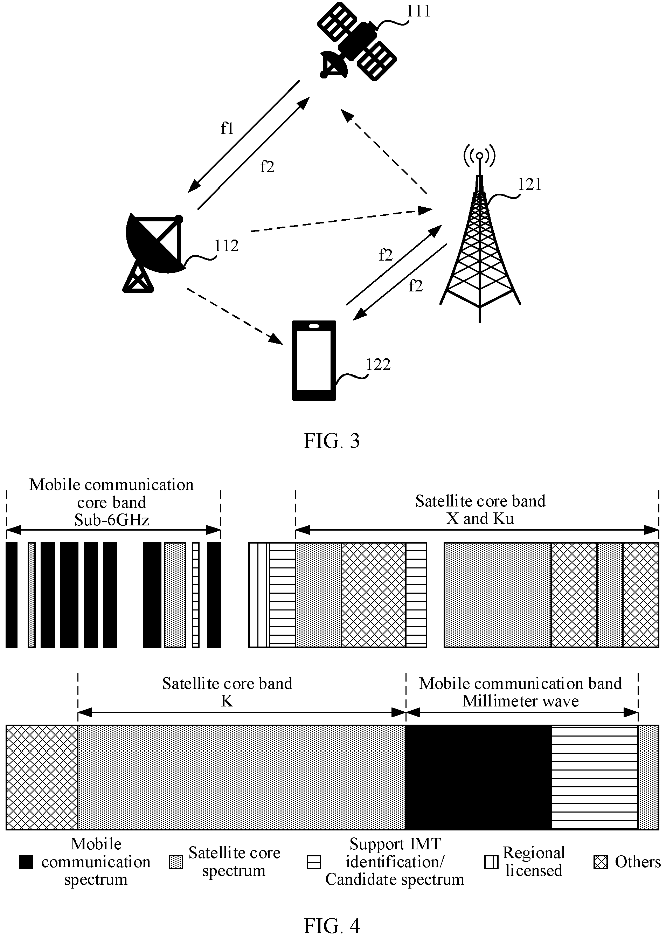

If the satellite communication system and the terrestrial communication system use an identical communication frequency and are deployed at a short distance, the two systems interfere with each other. FIG. 2 and FIG. 3 show two possible interference scenarios.

As shown in FIG. 2, the satellite communication system performs communication in an FDD manner. A frequency of an uplink (uplink, UL) is f2, and a frequency of a downlink (downlink, DL) is f1. The terrestrial communication system performs communication in a TDD manner, and a frequency of an uplink and a frequency of a downlink are both f1.

When the satellite 111 is located above the network device 121, a frequency of a signal transmitted by the network device 121 and a frequency of a signal transmitted by the terminal 122 are different from a receive frequency of the satellite 111. Therefore, the network device 121 and the terminal 122 do not interfere with communication of the satellite 111. Although a frequency of a downlink signal of the satellite 111 is the same as a receive frequency of the network device 121, a direction of a receive beam of the network device 121 is generally downward. Therefore, the downlink signal of the satellite 111 generally does not interfere with communication of the network device 121. The frequency of the downlink signal of the satellite 111 is the same as a frequency at which the terminal 122 receives a signal, which causes interference to the terminal 122. The frequency of the signal transmitted by the network device 121 and the frequency of the signal transmitted by the terminal 122 are the same as a receive frequency of the ground station 112. Both the network device 121 and the terminal 122 cause interference to the ground station 112. A dashed line in FIG. 2 represents an interference signal.

As shown in FIG. 3, the satellite communication system performs communication in an FDD mode. A frequency of an uplink is f2, and a frequency of a downlink is f1. The terrestrial communication system performs communication in a TDD mode, and a frequency of an uplink and a frequency of a downlink are both f2.

When the satellite 111 is located above the network device 121, a frequency of a signal transmitted by the network device 121 and a frequency of a signal transmitted by the terminal 122 are the same as a receive frequency of the satellite 111, but transmit power of the terminal 122 is usually small. Therefore, in a general case, only the network device 121 causes interference to the satellite 111. The frequency of the signal transmitted by the network device 121 and the frequency of the signal transmitted by the terminal 122 are different from a receive frequency of the ground station 112. Therefore, the network device 121 and the terminal 122 do not cause interference to the ground station 112. A frequency of a signal transmitted by the ground station 112 is the same as a receive frequency of the network device 121 and the terminal 122. Therefore, the ground station 112 causes interference to the network device 121 and the terminal 122. A dashed line in FIG. 3 represents an interference signal.

Because both the satellite communication system and the terrestrial communication system perform communication by using radio signals, to avoid mutual interference between the two systems when the systems are deployed at a short distance, the international telecommunication union (international telecommunication union, ITU) strictly performs division of spectrums of the satellite communication system and the terrestrial communication system, as shown in FIG. 4. Bands used by the terrestrial communication system are mainly a sub-6GHz band and a millimeter wave band. Bands used by the satellite communication system are mainly an X band, a Ku band, and a K band. Remaining bands are bands/candidate spectra that support international mobile telecommunications (international mobile telecommunications, IMT) identification, regional licensed bands, and other bands.

Although the spectrum division can resolve the mutual interference between the satellite communication system and the terrestrial communication system when the systems are deployed at a short distance, the satellite communication system and the terrestrial communication system cannot use spectrums of each other, resulting in low spectral utilization.

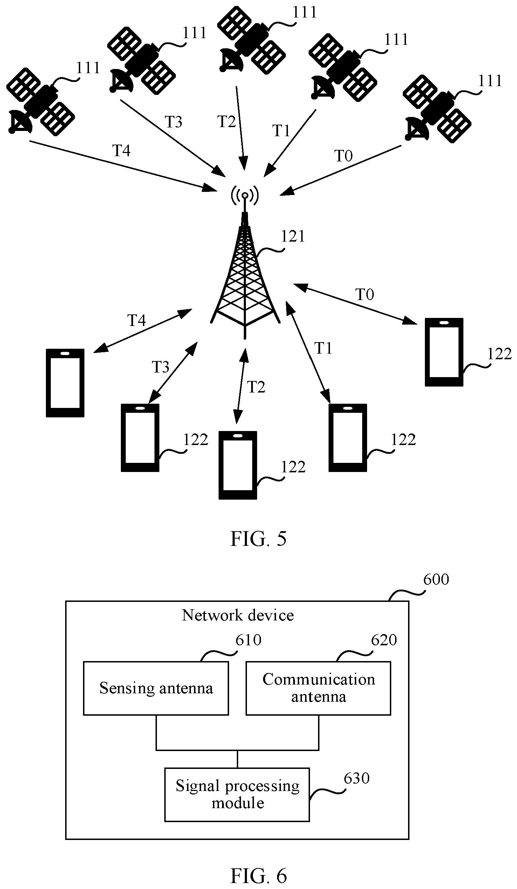

Because a satellite is in a motion state, a distance between the satellite and a network device varies with time, and a status of interference between the satellite and the network device also varies with time. A change condition of a relative location between the satellite and the network device is shown in FIG. 5. From a moment T0 to a moment T2, the satellite 111 gradually approaches the network device 121, and an interference degree between the satellite 111, the network device 121, and the terminal 122 gradually increases. From the moment T2 to a moment T4, the satellite 111 gradually moves away from the network device 121, and the interference degree between the satellite 111, the network device 121, and the terminal 122 gradually decreases. This characteristic may be used to design a communication manner. In this way, spectral utilization is improved, and a limitation on a deployment location of the network device is avoided.

First, the network device provided in this application is described. As shown in FIG. 6, a network device 600 includes a sensing antenna 610, a communication antenna 620, and a signal processing module 630.

The sensing antenna 610 includes M sensing antennas, the communication antenna 620 includes N communication antennas, and both M and N are positive integers. The M sensing antennas are configured to sense power of a satellite signal, and the N communication antennas are configured to perform communication by using a first carrier or a second carrier, where when the power of the satellite signal is less than or equal to a first power threshold, the N communication antennas perform communication by using the first carrier; when the power of the satellite signal is greater than the first power threshold, the N communication antennas perform communication by using the second carrier, the first carrier is a communication carrier of a satellite corresponding to the satellite signal, and the second carrier is not a communication carrier of a satellite corresponding to the satellite signal.

In this application, terms such as "first" and "second" are used to distinguish between different objects. For example, a first carrier and a second carrier represent different carriers, and constitute no other limitation.

An existing satellite band and a mobile communication band cannot be shared. Therefore, an antenna of an existing network device is usually an antenna dedicated to the mobile communication band, and cannot be for sensing the communication carrier of the satellite. The disposed M sensing antennas in this embodiment are antennas on the satellite band. The network device 600 may receive the satellite signal through the M sensing antennas, and then process the satellite signal via the signal processing module 630, so that the network device 600 can sense the power of the satellite signal, thereby providing a hardware basis for improving spectral utilization.

The sensing antenna 610 may be an antenna that supports switching between left-hand circular polarization and right-hand circular polarization, or may be an antenna that supports both the left-hand circular polarization and the right-hand circular polarization. For example, the sensing antenna 610 may be an end-fire circularly polarized antenna, an end-fire linearly polarized antenna, a broadside circularly polarized antenna, or a broadside linearly polarized antenna.

After sensing the power of the satellite signal, the network device 600 may perform communication based on the power of the satellite signal. When the power of the satellite signal is less than or equal to the first power threshold, it is indicated that the satellite is far away from the network device 600, and use of the first carrier by the network device 600 does not cause interference to the satellite. When the power of the satellite signal is greater than the first power threshold, it is indicated that the satellite is close to the network device 600, and the network device 600 may use the second carrier instead, to avoid interference to the satellite. Therefore, according to the embodiments, the spectral utilization can be improved, and a deployment location of the network device 600 is not limited.

The sensing antenna 610 and the communication antenna 620 may be co-located. For example, the sensing antenna 610 and the communication antenna 620 may be co-located on a PCB. In this way, no additional sensing site needs to be deployed, and costs and power consumption of sensing the power of the satellite signal may be reduced.

Optionally, the network device 600 further includes M receive links, the M receive links are connected to the M sensing antennas in one-to-one correspondence, and M is a positive integer greater than 1.

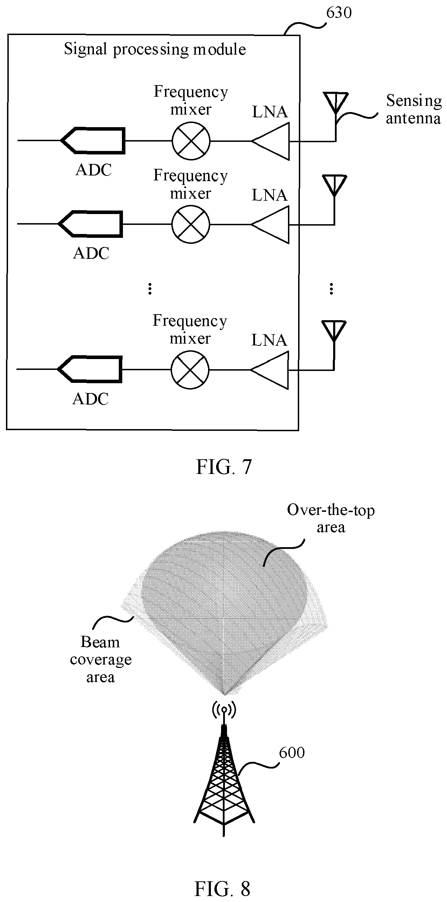

As shown in FIG. 7, a receive link includes a low noise amplifier (low noise amplifier, LNA), a frequency mixer, and an analog to digital converter (analog to digital converter, ADC). The receive link may further include more or fewer components. A specific form of the receive link is not limited in embodiments of this application. The network device 600 processes, through the receive link, the satellite signal received by the sensing antenna, to obtain the power of the satellite signal. In the network device shown in FIG. 7, each sensing antenna is connected to one receive link, to form a digital beamforming architecture.

An effect of the digital beamforming architecture is shown in FIG. 8. The M sensing antennas can simultaneously form a plurality of beams. The plurality of beams form a beam coverage area, and the beam coverage area includes an over-the-top area. The over-the-top area is an area in which a satellite is located when mutual interference exists between the satellite and a network device. Because each beam can obtain an entire antenna gain, global sensing at a top of the network device 600 can be implemented without a need of scanning, thereby improving sensing efficiency.

Optionally, the network device 600 further includes M switches, the M switches are connected to the M receive links in one-to-one correspondence, the M switches are connected to the M sensing antennas in one-to-one correspondence, and the M switches are connected to M communication antennas in the N communication antennas in one-to-one correspondence.

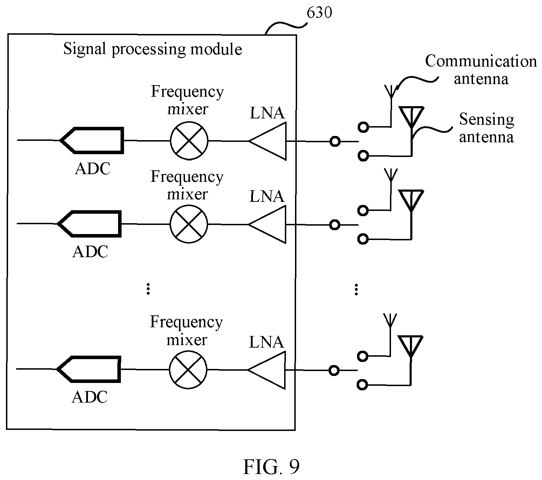

As shown in FIG. 9, the M switches are single-pole dual-throw switches. When a movable end of the single-pole dual-throw switch is connected to a non-movable end connected to a communication antenna, the receive link is connected to the communication antenna, and the receive link is disconnected from a sensing antenna. The signal processing module 630 can perform communication with a terminal through the communication antenna. When the movable end of the single-pole dual-throw switch is connected to a non-movable end connected to the sensing antenna, the receive link is disconnected from the communication antenna, and the receive link is connected to the sensing antenna. The signal processing module 630 can receive the satellite signal through the sensing antenna, and determine the power of the satellite signal.

The switch shown in FIG. 9 is an example rather than a limitation, and another switch that can implement switching between a communication antenna and a sensing antenna is also applicable to this application. In this embodiment, the M sensing antennas share the receive links with the M communication antennas, and the receive links are used in different time through switching via the switches, so that costs of the network device 600 may be reduced without affecting a communication function and a sensing function.

Optionally, the network device 600 further includes M transmit links, and the M switches are connected to the M transmit links in one-to-one correspondence.

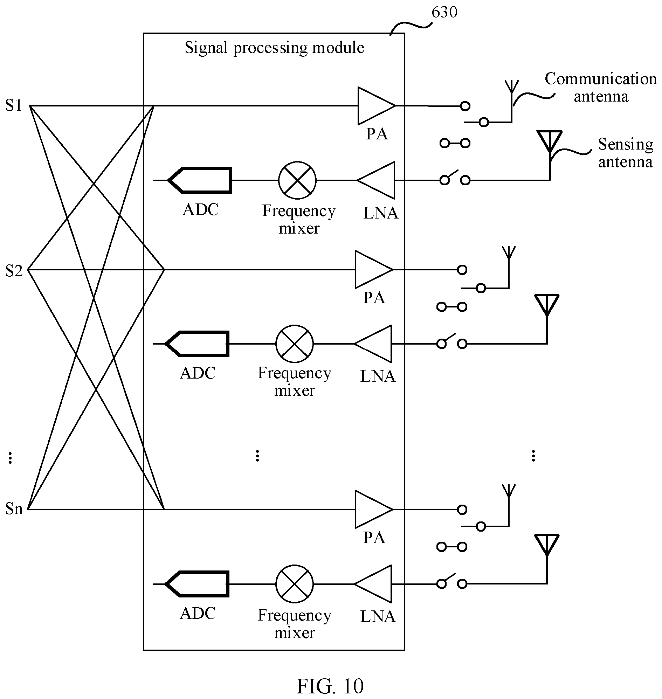

As shown in FIG. 10, each switch includes six endpoints, where two endpoints are movable ends, the other four endpoints are non-movable ends. S1 to Sn are n signal sources, and a link including a power amplifier (power amplifier, PA) is a transmit link.

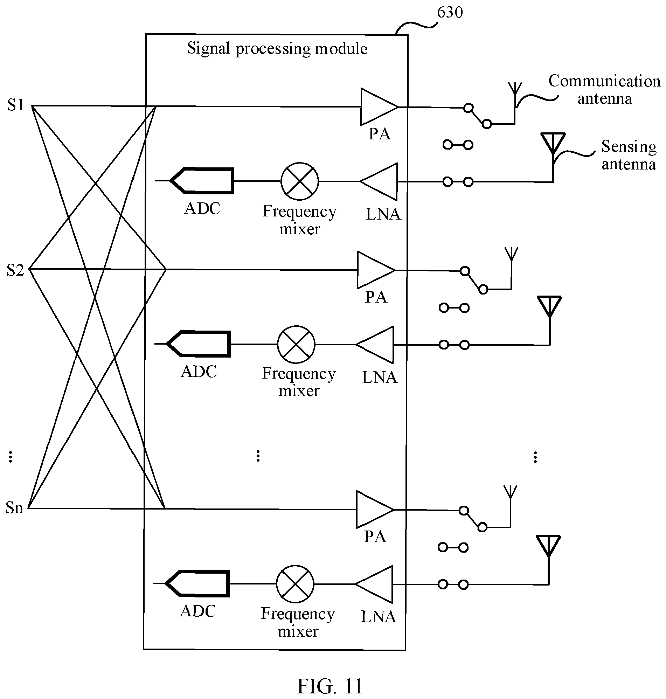

When one movable end is in communication with the transmit link and a communication antenna, and the other movable end is in communication with a receive link and a sensing antenna, the network device 600 can transmit a signal through the transmit link and the communication antenna, and can receive the satellite signal through the receive link and the sensing antenna. In this case, the M transmit links are connected to the M communication antennas via the M switches, and the M receive links are disconnected from the M communication antennas. A state of the switches is shown in FIG. 11.

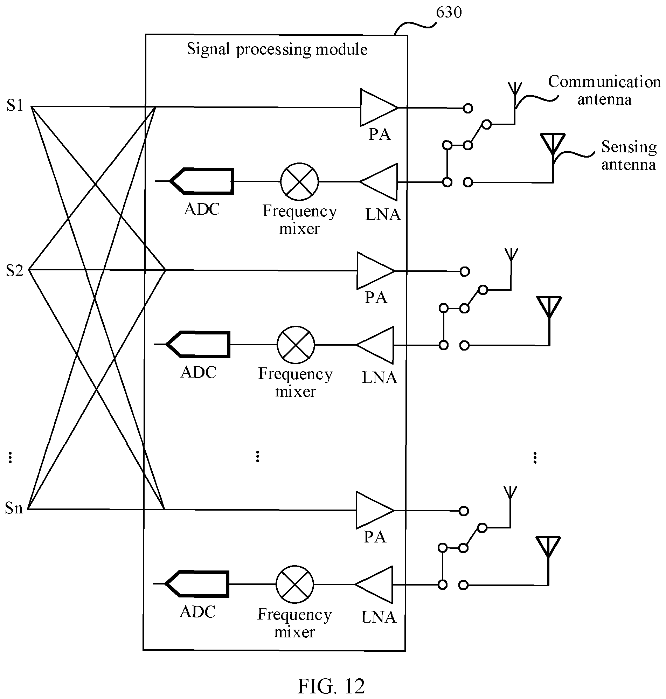

When the two movable ends are in communication with the receive link and the communication antenna, the network device 600 can receive an uplink signal of a terminal through the receive link and the communication antenna. In this case, the M receive links are connected to the M communication antennas via the M switches, and the M transmit links are disconnected from the M communication antennas. A state of the switches is shown in FIG. 12.

In this embodiment, the M switches may be configured to switch connection relationships of the receive links, and may be further configured to switch connection relationships of the transmit links, thereby saving switch components and reducing the costs of the network device 600.

Optionally, the M sensing antennas are located above the N communication antennas.

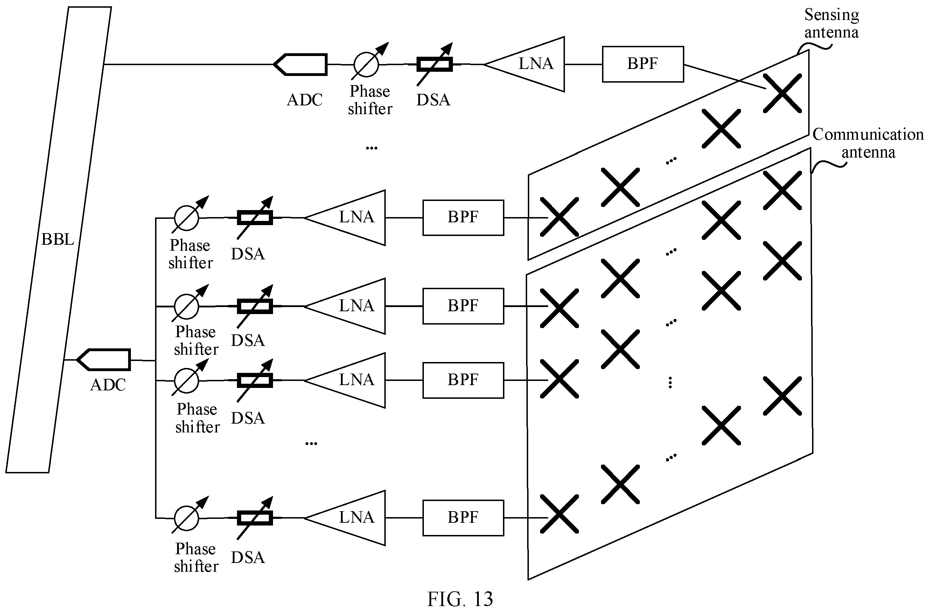

As shown in FIG. 13, the network device 600 includes a communication antenna array and a row of sensing antennas. The sensing antennas are disposed above the communication antenna array. Each antenna is connected to a receive link, where each receive link includes a bandpass filter (bandpass filter, BPF), an LNA, a digital step attenuator (digital step attenuator, DSA), a phase shifter, and an ADC. A plurality of receive links share a baseband low (baseband low, BBL).

Because the satellite is located above the network device 600, and the terminal is usually located below the network device 600, the sensing antenna is disposed above the communication antenna, so that communication between the terminal and the network device 600 is not affected, and a requirement on an elevation angle for receiving the satellite signal can be met, and therefore, the satellite signal can be better sensed.

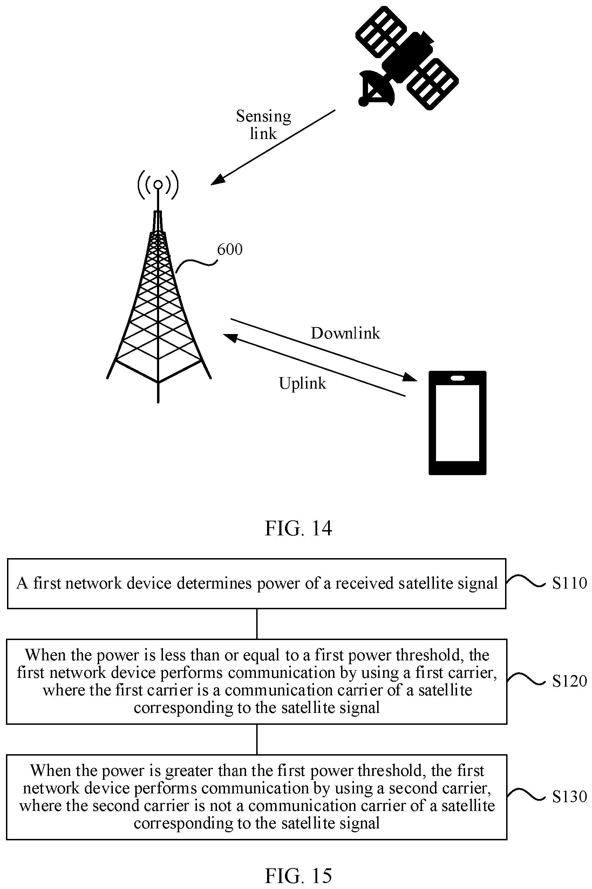

Based on an architecture in which the sensing antenna and the communication antenna coexist, the network device 600 can implement an effect shown in FIG. 14, that is, sense the power of the satellite signal by using the sensing antenna, and communicate with the terminal by using the communication antenna. A path for sensing the power of the satellite signal through the sensing antenna may be referred to as a sensing link, and paths for communicating with the terminal through the communication antenna may be referred to as an uplink and a downlink.

The following describes embodiments of a communication method provided in this application. As shown in FIG. 15, the method includes the following content.

S110: A first network device determines power of a received satellite signal.

The first network device may be the network device 600 described above, or may be a network device without a sensing antenna. The following separately describes the two cases.

Case 1: The first network device is the network device 600.

The first network device may determine the power of the received satellite signal based on the sensing antenna of the first network device. The first network device may sense the power of the satellite signal at any moment. Optionally, the first network device may also sense the power of the satellite signal at a specific moment.

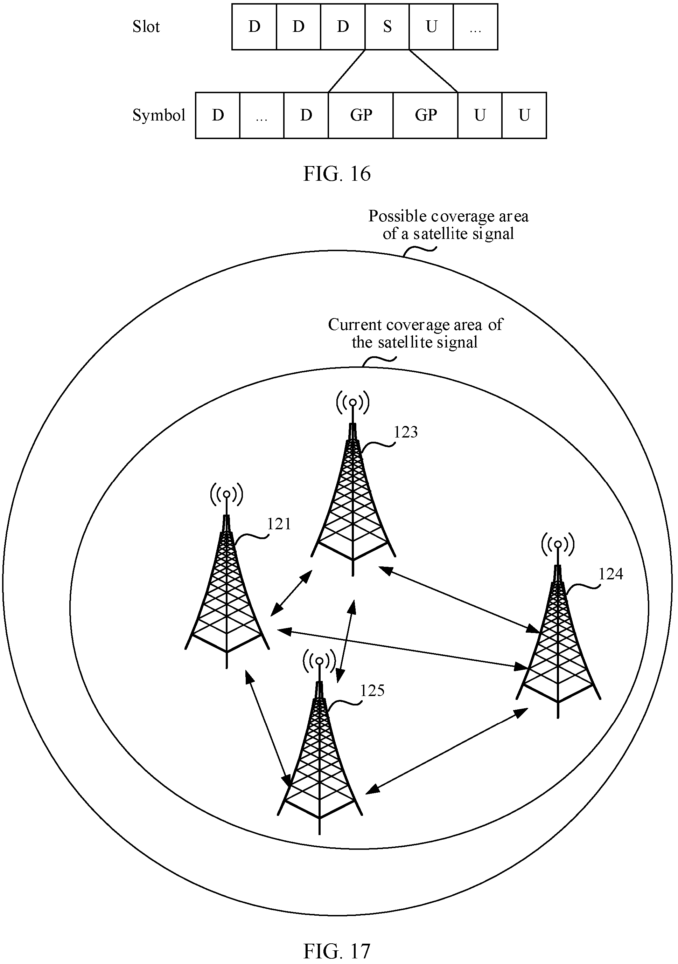

For example, time domain resources of the first network device may be divided in a form shown in FIG. 16, where D represents downlink, U represents uplink, and S represents a flexible slot, and may be configured in a plurality of forms. Optionally, an S slot may be divided into a D symbol, a U symbol, and a guard period (guard period, GP). Optionally, a ratio of the D symbol to a GP symbol to the U symbol is 10:2:2. Calculation is performed based on duration of each symbol being 0.5 ms, and time occupied by the GP symbol may be calculated as approximately 70 µs.

The D symbol is configured to perform downlink transmission. The U symbol is configured to perform uplink transmission. The GP symbol may be used as a transition guard period between the uplink transmission and the downlink transmission, and the first network device may receive the satellite signal in the GP symbol through the sensing antenna, to determine the power of the satellite signal. Because the first network device usually does not transmit service data in the GP symbol, but senses the power of the satellite signal in the GP symbol, an impact caused by sensing the power of the satellite signal on service data transmission can be avoided.

Case 2: The first network device is a network device without the sensing antenna.

The first network device may receive first power information of a satellite from a second network device, and then determine the power of the satellite signal based on the first power information.

As shown in FIG. 17, a network device 121, a network device 123, a network device 124, and a network device 125 are currently in coverage of the satellite signal, and the four network devices can perform communication with each other through Xn interfaces. The network device 121 does not have a sensing antenna, and the network device 123, the network device 124, and the network device 125 have sensing antennas. In this case, the network device 121 may receive power information from the network device 123, the network device 124, and the network device 125, and determine the power of the satellite signal based on the power information.

In Case 2, the first network device can determine the power of the satellite signal without a need of hardware alteration, thereby reducing costs of determining the power of the satellite signal.

In some cases, a sensing function of the first network device may be abnormal, and the first network device may make a decision based on a sensing result of a nearby network device.

For example, the first network device receives second power information of the satellite from a third network device; and the first network device determines the power of the received satellite signal based on the first power information and the second power information, where when an absolute value of a difference between power indicated by the first power information and power sensed by the first network device is greater than a fourth power threshold, and when an absolute value of a difference between power indicated by the second power information and the power sensed by the first network device is greater than the fourth power threshold, the first network device determines that power indicated by target power information is the power of the received satellite signal; and the target power information is power information of a network device closest to the first network device.

When the difference between the power indicated by the first power information and the power sensed by the first network device is greater than the fourth power threshold, and when the difference between the power indicated by the second power information and the power sensed by the first network device is greater than the fourth power threshold, it is indicated that there is a relatively large difference between a sensing result of the first network device and sensing results of a plurality of nearby network devices. The first network device may discard the sensing result of the first network device, and use a sensing result of a nearby network device as the power of the satellite signal received by the first network device, thereby avoiding interference caused by sensing function abnormality to satellite communication.

As shown in FIG. 17, power of a satellite signal sensed by the network device 121 is P1, power of a satellite signal sensed by the network device 123 is P2, and power of a satellite signal sensed by the network device 125 is P3. The network device 121, the network device 123, and the network device 125 are network devices that are close to each other. Differences between the powers of the satellite signals sensed by the three network devices should not be excessively large. If an absolute value of a difference between P1 and P2 is greater than the fourth power threshold, and an absolute value of a difference between P1 and P3 is greater than the fourth power threshold, it is indicated that a sensing function of the network device 121 may be abnormal. The network device 121 may discard a sensing result of the network device 121, and use a sensing result of a nearest network device (for example, the network device 123) as the power of the satellite signal received by the network device 121, thereby avoiding interference caused by sensing function abnormality to satellite communication.

After the power of the satellite signal is determined, the first network device may perform the following steps.

S120: When the power is less than or equal to a first power threshold, the first network device performs communication by using a first carrier, where the first carrier is a communication carrier of a satellite corresponding to the satellite signal.

S130: When the power is greater than the first power threshold, the first network device performs communication by using a second carrier, where the second carrier is not a communication carrier of a satellite corresponding to the satellite signal.

When the power of the satellite signal is less than or equal to the first power threshold, it is indicated that the satellite is far away from the first network device, and use of the first carrier by the first network device does not cause interference to the satellite. When the power of the satellite signal is greater than the first power threshold, it is indicated that the satellite is close to the first network device, and the first network device may use the second carrier instead, to avoid interference to the satellite. Therefore, according to the embodiments, spectral utilization can be improved, and a deployment location of the first network device is not limited.

Optionally, the first network device may further perform more refined processing based on the power of the satellite signal.

### Implementation 1:

When the power of the satellite signal is less than or equal to the first power threshold, and when the power of the satellite signal is greater than a second power threshold, the first network device may suppress an upper side lobe of the first carrier, where the second power threshold is less than the first power threshold.

When the power of the satellite signal is less than or equal to the first power threshold, and when the power of the satellite signal is greater than the second power threshold, it is indicated that the satellite is far away from the first network device, but there is still strong interference between the satellite and the first network device. In this case, the interference between the satellite and the first network device can be reduced by using an upper side lobe suppression function, and the first network device can still perform communication by using the satellite carrier (first carrier), thereby improving the spectral utilization.

### Implementation 2:

When the power of the satellite signal is less than or equal to the first power threshold, and when the power of the satellite signal is greater than a third power threshold, the first network device may decrease transmit power of the first carrier, and suppresses an upper side lobe of the first carrier, where the third power threshold is greater than a second power threshold.

Compared with the case in which the power of the satellite signal is greater than the second power threshold, in Implementation 2, a distance between the satellite and the first network device is further reduced, and interference between the satellite and the first network device is further increased. A communication requirement may not be met by using only the upper side lobe suppression function. In this implementation, the transmit power of the first carrier is decreased, so that the first network device can still perform communication by using the satellite carrier (first carrier) when the power of the satellite signal is greater than the third power threshold, thereby improving the spectral utilization.

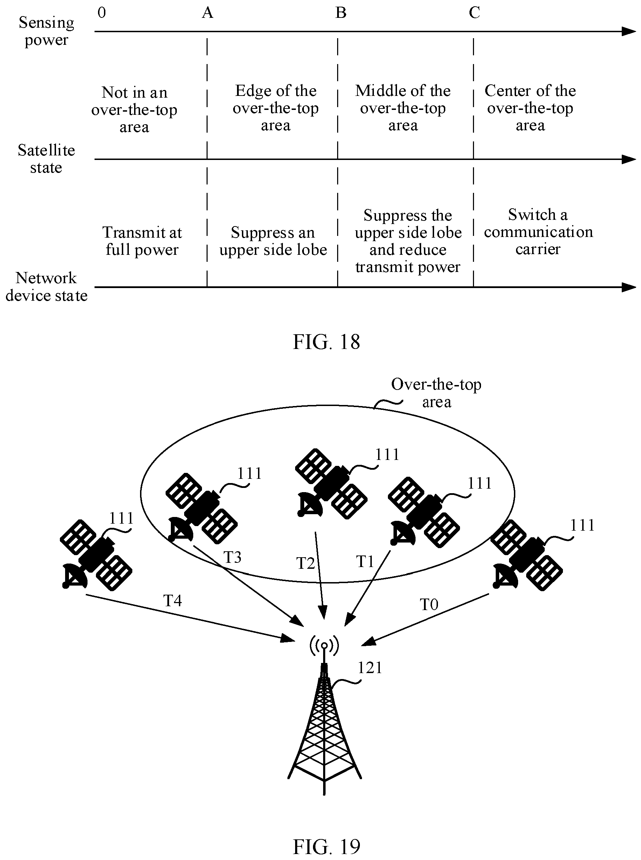

FIG. 18 shows processing manners of the first network device at different sensing power (namely, power of the sensed satellite signal).

When the sensing power is less than A (equivalent to the second power threshold), it is indicated that the satellite is not in an over-the-top area, and the first network device may perform transmission at full power by using the communication carrier of the satellite.

When the sensing power is greater than A and less than B (equivalent to the third power threshold), it is indicated that the satellite is at an edge location of the over-the-top area, and the first network device may perform transmission at full power by using the communication carrier of the satellite, but an upper side lobe needs to be suppressed.

When the sensing power is greater than B and less than C (equivalent to the first power threshold), it is indicated that the satellite is at a middle location of the over-the-top area, and the first network device may transmit a signal by using the communication carrier of the satellite. However, a communication requirement cannot be met by suppressing only the upper side lobe, and the first network device further needs to decrease the transmit power.

When the sensing power is greater than C, it is indicated that when the satellite is at a central location in the over-the-top area, a communication requirement may not be met by suppressing the upper side lobe and decreasing the transmit power, and the first network device may switch the communication carrier and perform communication by using the second carrier.

A starlink satellite is used as an example. It may be calculated that A is -93.5 dBm (the satellite is approximately located at a position right above the first network device, offset by 40°), B is -89.7 dBm (the satellite is approximately located at a position right above the first network device, offset by 20°), and C is -89.2 dBm (the satellite is approximately located at a position right above the first network device).

FIG. 19 shows relative location relationships between a satellite and a first network device at different moments.

At a moment T0, a satellite 111 is located outside an over-the-top area of the network device 121 (an example of the first network device). In this case, the power of the satellite signal sensed by the network device 121 is very low, interference between the network device 121 and the satellite 111 may be ignored, and the network device 121 may perform transmission at full power by using the communication carrier (for example, the first carrier) of the satellite.

At a moment T1, the satellite 111 is located at a middle location of the over-the-top area of the network device 121, and the interference between the network device 121 and the satellite 111 is large. The network device 121 may transmit a signal by using the communication carrier of the satellite, but needs to suppress an upper side lobe and decrease transmit power.

At a moment T2, the satellite 111 is located at a central location of the over-the-top area of the network device 121, and the interference between the network device 121 and the satellite 111 further increases. A communication requirement may not be met by suppressing the upper side lobe and decreasing the transmit power. The network device 121 may switch the communication carrier and perform communication by using the second carrier.

At a moment T3, the satellite 111 is located at an edge location of the over-the-top area of the network device 121, and the interference between the network device 121 and the satellite 111 is small. The network device 121 may transmit a signal by using the communication carrier of the satellite, but needs to suppress the upper side lobe.

At a moment T4, the satellite 111 is located outside the over-the-top area of the network device 121. In this case, the power of the satellite signal sensed by the network device 121 is very low, the interference between the network device 121 and the satellite 111 may be ignored, and the network device 121 may perform transmission at full power by using the communication carrier of the satellite.

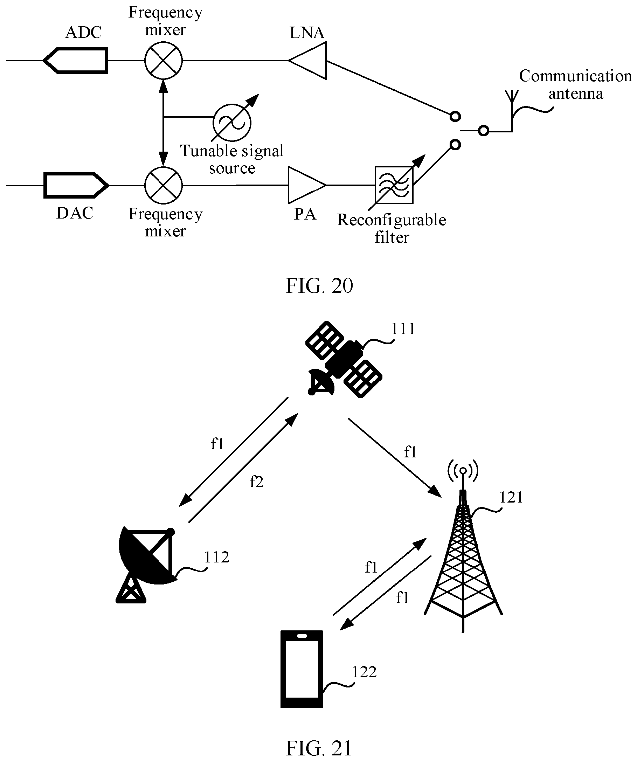

FIG. 20 shows a transmit circuit according to an embodiment of this application. The transmit circuit may be used in a first network device. The transmit circuit includes a communication antenna, a single-pole dual-throw switch, an LNA, a frequency mixer, a DAC, a reconfigurable filter, a PA, an ADC, and a tunable signal source.

When the first network device transmits a signal, a movable end of the single-pole dual-throw switch is connected to a non-movable end at which the reconfigurable filter is located, different carriers (for example, a first carrier or a second carrier) are generated via the tunable signal source and the frequency mixer, and then are transmitted via the PA, the reconfigurable filter, and the communication antenna.

When the first network device receives a signal, the movable end of the single-pole dual-throw switch is connected to a non-movable end at which the LNA is located, and the signal transmitted by a terminal is received via the communication antenna, the LNA, the frequency mixer, and the ADC.

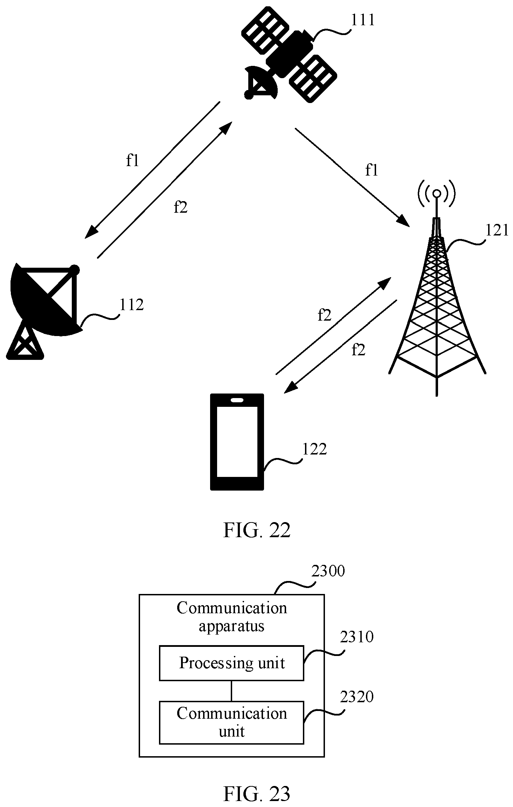

FIG. 21 and FIG. 22 are drawings of effect achieved according to the foregoing embodiments.

In FIG. 21, after sensing a downlink signal of the satellite 111, the network device 121 determines that a carrier currently used by the network device 121 is the same as a downlink carrier of the satellite 111. The network device 121 may perform the method in the foregoing method embodiment, to reduce interference between a satellite communication system and a terrestrial communication system. Compared with FIG. 2, in FIG. 21, the satellite 111 no longer causes interference to a terminal 122, and the terminal 122 and the network device 121 no longer cause interference to a ground station 112.

In FIG. 22, after sensing a downlink signal of the satellite 111, the network device 121 determines a band of an uplink signal of the satellite based on the downlink signal of the satellite 111, to determine that a carrier currently used by the network device 121 is the same as an uplink carrier of the satellite 111. The network device 121 may perform the method in the foregoing method embodiment, to reduce interference between a satellite communication system and a terrestrial communication system. Compared with FIG. 3, in FIG. 22, the network device 121 no longer causes interference to the satellite 111, and a ground station 112 no longer causes interference to a terminal 122 and the network device 121.

An example of the communication method provided in embodiments of this application is described above in detail. It may be understood that, to implement the foregoing functions, a communication apparatus includes corresponding hardware structures and/or software modules for performing the functions. A person skilled in the art should easily be aware that, in combination with units and algorithm steps of the examples described in embodiments disclosed in this specification, this application can be implemented by using hardware or a combination of the hardware and computer software. Whether a function is performed by using hardware or hardware driven by computer software depends on particular applications and design constraints of technical solutions. A person skilled in the art may use different methods to implement the described functions for each particular application, but it should not be considered that the implementation goes beyond the scope of this application.

FIG. 23 is a diagram of a structure of a communication apparatus according to an embodiment of this application. The communication apparatus 2300 includes a processing unit 2310 and a communication unit 2320.

The processing unit 2310 is configured to determine power of a received satellite signal.

The communication unit 2320 is configured to: when the power is less than or equal to a first power threshold, perform communication by using a first carrier, where the first carrier is a communication carrier of a satellite corresponding to the satellite signal; when the power is greater than the first power threshold, perform communication by using a second carrier, where the second carrier is not a communication carrier of a satellite corresponding to the satellite signal.

Optionally, when the power is less than or equal to the first power threshold, and when the power is greater than a second power threshold, the communication unit 2320 is further configured to suppress an upper side lobe of the first carrier, where the second power threshold is less than the first power threshold.

Optionally, when the power is less than or equal to the first power threshold, and when the power is greater than a third power threshold, the communication unit 2320 is further configured to decrease transmit power of the first carrier, where the third power threshold is greater than the second power threshold.

Optionally, the processing unit 2310 is specifically configured to determine the power within a guard period.

Optionally, the processing unit 2310 is specifically configured to: receive first power information of the satellite from a second network device; and determine the power of the received satellite signal based on the first power information.

Optionally, the processing unit 2310 is specifically configured to: receive second power information of the satellite from a third network device, and determine the power of the received satellite signal based on the first power information and the second power information, where when a difference between power indicated by the first power information and sensed power is greater than a fourth power threshold, and when a difference between power indicated by the second power information and the sensed power is greater than the fourth power threshold, it is determined that power indicated by target information is the power of the received satellite signal; and the target power information is power information of a network device closest to the apparatus.

It may be clearly understood by a person skilled in the art that, for a detailed working process of the communication apparatus 2300 and technical effects generated by execution steps, refer to the descriptions in the foregoing corresponding method embodiment. For brevity, details are not described herein again.

The communication apparatus 2300 may be a chip. The processing unit 2310 may be implemented by using hardware or software. When being implemented by using hardware, the processing unit may be a logic circuit, an integrated circuit, or the like. When the processing unit 2310 is implemented by using software, the processing unit 2310 may be a general-purpose processor, and is implemented by reading software code stored in a storage unit, where the storage unit may be integrated in the processing unit 2310, or may be located outside the processing unit 2310 and exist independently.

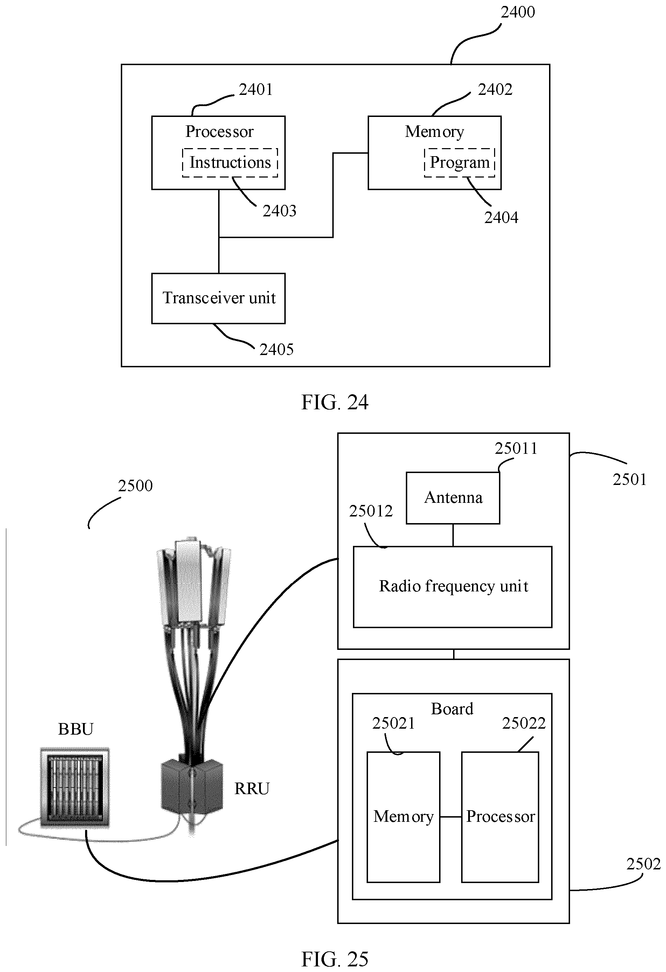

FIG. 24 is a diagram of a structure of another communication apparatus according to an embodiment of this application. The communication apparatus 2400 may be configured to perform the steps of the method described in the foregoing method embodiment. For a specific process, refer to the descriptions in the foregoing method embodiment. The communication apparatus 2400 may be a chip or an access network device (for example, a base station).

The communication apparatus 2400 includes one or more processors 2401. The processor 2401 may be a general-purpose processor, a dedicated processor, or the like. For example, the processor 2401 may be a central processing unit or a baseband processor. The baseband processor may be configured to process a communication protocol and communication data. The central processing unit may be configured to: control the communication apparatus 2400, execute a software program, and process data of the software program. The communication apparatus 2400 may include a transceiver unit 2405, configured to implement signal input (receiving) and signal output (sending).

For example, the communication apparatus 2400 may be a chip, the transceiver unit 2405 may be an input and/or output circuit of the chip, or a communication interface, and the chip may be used in a base station or another communication device. For another example, the communication apparatus 2400 may be a base station or another communication device, and the transceiver unit 2405 may be a transceiver, a radio frequency chip, or the like.

The communication apparatus 2400 may include one or more memories 2402. The communication apparatus 2400 stores a program 2404. The program 2404 may be run by the processor 2401 to generate instructions 2403, so that the processor 2401 is caused to perform, based on the instructions 2403, the method described in the foregoing method embodiment. Optionally, the memory 2402 may further store data. Optionally, the processor 2401 may further read the data (for example, a power threshold) stored in the memory 2402. The data and the program 2404 may be stored at a same storage address, or the data and the program 2404 may be stored at different storage addresses.

The processor 2401 and the memory 2402 may be separately disposed, or may be integrated together.

FIG. 25 is a diagram of a structure of a base station according to this application. The base station may be used in the communication system shown in FIG. 1, to implement functions of the first network device in the foregoing method embodiment. The base station 2500 may include one or more radio frequency units, such as a remote radio unit (remote radio unit, RRU) 2501 and one or more baseband units (baseband units, BBUs) (which may also be referred to as a digital unit (digital unit, DU)) 2502. The RRU 2501 may be referred to as a transceiver unit, a transceiver machine, a transceiver circuit, a transceiver, or the like, and may include at least one antenna 25011 and a radio frequency unit 25012. The RRU 2501 part is mainly configured to: receive and transmit a radio frequency signal, and perform conversion between the radio frequency signal and a baseband signal. The BBU 2502 part is mainly configured to: perform baseband processing, control a base station, and the like. The RRU 2501 and the BBU 2502 may be physically disposed together, or may be physically disposed in a separate manner, that is, a distributed base station.

As a control center of the base station, the BBU 2502 may also be referred to as a processing unit, mainly configured to complete a baseband processing function such as channel coding, multiplexing, modulation, and spreading. For example, the BBU 2502 may be configured to control the base station to execute an operation procedure related to the first network device in the foregoing method embodiment.

In an embodiment, the BBU 2502 may include one board or a plurality of boards, and the plurality of boards may jointly support a radio access network (for example, an LTE network) of a single access indication, or may separately support radio access networks (for example, an LTE network, a 5G network, or another network) of different access standards. The BBU 2502 further includes a memory 25021 and a processor 25022, and the memory 25021 is configured to store necessary instructions and data. For example, the memory 25021 stores the power thresholds in the foregoing method embodiment. The processor 25022 is configured to control the base station to perform a necessary action, for example, configured to control the base station to execute the operation procedure related to the first network device in the foregoing method embodiment. The memory 25021 and the processor 25022 may serve the board or the plurality of boards. In other words, a memory and a processor may be separately disposed on each board. Alternatively, the plurality of boards may share a same memory and a same processor. In addition, a necessary circuit may be further disposed on each board.

It should be noted that the processor in embodiments of this application may be an integrated circuit chip, and has a signal processing capability. In an implementation process, steps in the foregoing method embodiment may be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. Steps of the method disclosed with reference to embodiments of this application may be directly executed and completed by using a hardware decoding processor, or may be executed and completed by using a combination of hardware and software modules in the decoding processor. The software module may be stored in a storage medium that is mature in the art, such as a random access memory, a flash memory, a read-only memory, a programmable read-only memory, an electrically erasable programmable memory, or a register. The storage medium is located in the memory. The processor reads information in the memory and completes the steps of the method in combination with hardware of the processor.

It may be understood that the memory in this embodiment of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. By way of example rather than limitative description, many forms of RAMs are usable, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that, the memory in the systems and method described in this specification aims to include but is not limited to these memories and any memory of another proper type.

This application further provides a computer-readable medium, where a computer program is stored on the computer-readable medium. When the computer program is executed by a computer, functions of any method embodiment above are implemented.

This application further provides a computer program product. When the computer program product is executed by a computer, functions of any method embodiment above are implemented.

All or a part of the foregoing embodiments may be implemented by software, hardware, firmware, or any combination thereof. When the software is used for implementation, all or a part of the foregoing embodiments may be implemented in a form of a computer program product. The computer program product includes one or more computer instructions. When the computer instructions are loaded and executed on the computer, the procedure or the functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

It should be further understood that, in this application, "when", "if", and "provided that" mean that a UE or a base station performs corresponding processing in an objective situation, but do not constitute any limitation on time, do not require the UE or the base station to perform a determining action during implementation, and do not mean other limitations either.

In addition, terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

In conclusion, the foregoing descriptions are merely preferred embodiments of the technical solutions of this application, and are not intended to limit the protection scope of this application. Any modification, equivalent replacement, or improvement made without departing from the spirit and principle of this application shall fall within the protection scope of this application.

## Claims

1. A communication method, comprising:
determining, by a first network device, power of a received satellite signal;
when the power is less than or equal to a first power threshold, performing, by the first network device, communication by using a first carrier, wherein the first carrier is a communication carrier of a satellite corresponding to the satellite signal; and
when the power is greater than the first power threshold, performing, by the first network device, communication by using a second carrier, wherein the second carrier is not a communication carrier of a satellite corresponding to the satellite signal.

2. The method according to claim 1, wherein when the power is less than or equal to the first power threshold, and when the power is greater than a second power threshold, the method further comprises:
suppressing, by the first network device, an upper side lobe of the first carrier, wherein the second power threshold is less than the first power threshold.

3. The method according to claim 2, wherein when the power is less than or equal to the first power threshold, and when the power is greater than a third power threshold, the method further comprises:
decreasing, by the first network device, transmit power of the first carrier, wherein the third power threshold is greater than the second power threshold.

4. The method according to any one of claims 1 to 3, wherein determining, by the first network device, the power of the received satellite signal comprises:
determining, by the first network device, the power within a guard period.

5. The method according to any one of claims 1 to 4, wherein determining, by the first network device, the power of the received satellite signal comprises:
receiving, by the first network device, first power information of the satellite from a second network device; and
determining, by the first network device, the power of the received satellite signal based on the first power information.

6. The method according to claim 5, wherein determining, by the first network device, the power of the received satellite signal based on the first power information comprises:
receiving, by the first network device, second power information of the satellite from a third network device; and
determining, by the first network device, the power of the received satellite signal based on the first power information and the second power information, wherein when an absolute value of a difference between power indicated by the first power information and power sensed by the first network device is greater than a fourth power threshold, and when an absolute value of a difference between power indicated by the second power information and the power sensed by the first network device is greater than the fourth power threshold, the first network device determines that power indicated by target power information is the power of the received satellite signal; and the target power information is power information of a network device closest to the first network device.

7. A network device, wherein the network device comprises M sensing antennas and N communication antennas, and both M and N are positive integers;
the M sensing antennas are configured to sense power of a satellite signal; and
the N communication antennas are configured to perform communication by using a first carrier or a second carrier, wherein when the power is less than or equal to a first power threshold, the N communication antennas perform communication by using the first carrier; when the power is greater than the first power threshold, the N communication antennas perform communication by using the second carrier, the first carrier is a communication carrier of a satellite corresponding to the satellite signal, and the second carrier is not a communication carrier of a satellite corresponding to the satellite signal.

8. The network device according to claim 7, wherein the network device further comprises M receive links, the M receive links are connected to the M sensing antennas in one-to-one correspondence, and M is a positive integer greater than 1.

9. The network device according to claim 8, wherein the network device further comprises M switches, the M switches are connected to the M receive links in one-to-one correspondence, the M switches are connected to the M sensing antennas in one-to-one correspondence, and the M switches are connected to M communication antennas in the N communication antennas in one-to-one correspondence;
when the M receive links are connected to the M sensing antennas via the M switches, the M receive links are disconnected from the M communication antennas; and
when the M receive links are connected to the M communication antennas via the M switches, the M receive links are disconnected from the M sensing antennas.

10. The network device according to claim 9, wherein the network device further comprises M transmit links, and the M switches are connected to the M transmit links in one-to-one correspondence;
when the M receive links are connected to the M communication antennas via the M switches, the M transmit links are disconnected from the M communication antennas; and
when the M transmit links are connected to the M communication antennas via the M switches, the M receive links are disconnected from the M communication antennas.

11. The network device according to any one of claims 7 to 10, wherein the M sensing antennas are located above the N communication antennas.

12. A communication apparatus, comprising a processing unit and a communication unit, wherein
the processing unit is configured to determine power of a received satellite signal; and
the communication unit is configured to: when the power is less than or equal to a first power threshold, perform communication by using a first carrier, wherein the first carrier is a communication carrier of a satellite corresponding to the satellite signal; and when the power is greater than the first power threshold, perform communication by using a second carrier, wherein the second carrier is not a communication carrier of a satellite corresponding to the satellite signal.

13. The apparatus according to claim 12, wherein when the power is less than or equal to the first power threshold, and when the power is greater than a second power threshold, the communication unit is further configured to:
suppress an upper side lobe of the first carrier, wherein the second power threshold is less than the first power threshold.

14. The apparatus according to claim 13, wherein when the power is less than or equal to the first power threshold, and when the power is greater than a third power threshold, the communication unit is further configured to:
decrease transmit power of the first carrier, wherein the third power threshold is greater than the second power threshold.

15. The apparatus according to any one of claims 12 to 14, wherein the processing unit is specifically configured to:
determine the power within a guard period.

16. The apparatus according to any one of claims 12 to 15, wherein the processing unit is specifically configured to:
receive first power information of the satellite from a second network device; and
determine the power of the received satellite signal based on the first power information.

17. The apparatus according to claim 16, wherein the processing unit is specifically configured to:
receive second power information of the satellite from a third network device; and
determine the power of the received satellite signal based on the first power information and the second power information, wherein when an absolute value of a difference between power indicated by the first power information and sensed power is greater than a fourth power threshold, and when an absolute value of a difference between power indicated by the second power information and the sensed power is greater than the fourth power threshold, it is determined that power indicated by target information is the power of the received satellite signal; and the target power information is power information of a network device closest to the apparatus.

18. A computer-readable storage medium, wherein the computer-readable storage medium stores a computer program; and when the computer program is executed on a computer, the computer is enabled to perform the method according to any one of claims 1 to 6.
